# EUROPÄISCHE PATENTSCHRIFT

(11) **EP 2 715 702 B1**
(45) Veröffentlichungstag und Bekanntmachung des Hinweises auf die Patenterteilung: **08.11.2017**
(21) Anmeldenummer: 12722371.7
(22) Anmeldetag: 21.05.2012
(51) Int. Cl.: G09B 9/14

(54) **VORRICHTUNG ZUR RÄUMLICHEN BEWEGUNG VON PERSONEN**
DEVICE FOR SPATIALLY MOVING PERSONS
DISPOSITIF DE DÉPLACEMENT SPATIAL DE PERSONNES

(30) Priorität: 23.05.2011 US 201161489065 P; 23.05.2011 AT 7392011
(43) Veröffentlichungstag der Anmeldung: 09.04.2014
(73) Patentinhaber: AMST-Systemtechnik GmbH, 5282 Ranshofen (AT)
(72) Erfinder: SCHLÜSSELBERGER, Richard, A-5280 Braunau am Inn (AT)
(74) Vertreter: Puchberger & Partner Patentanwälte
(86) Internationale Anmeldenummer: PCT/EP2012/059364
(87) Internationale Veröffentlichungsnummer: WO 2012/160022

(56) Entgegenhaltungen:
- EP-A2- 0 965 968
- FR-A1- 2 687 491
- GB-A- 2 474 279
- US-A- 4 162 582
- US-A- 5 060 932
- US-A- 5 433 608

## Beschreibung

Die Erfindung betrifft eine Vorrichtung zur räumlichen Bewegung von Personen umfassend: ein erstes Trägerelement, das eine Haltevorrichtung für zumindest eine Person aufweist und um eine erste Drehachse drehbar gegenüber einem zweiten Trägerelement angeordnet ist; ein zweites Trägerelement, das um eine zweite Drehachse drehbar gegenüber einem dritten Trägerelement angeordnet ist, wobei die erste Drehachse und die zweite Drehachse im Wesentlichen orthogonal zueinander angeordnet sind; und eine Bildwiedergabefläche.

Die Vorrichtung dient unter anderem der Simulation von bewegten Systemen, wie beispielsweise Fahrzeugen, Schiffen, Flugzeugen oder Ähnlichem. Dabei wird einer Person, die sich in einem Hohlkörper oder einer Kabine befindet, über eine Vielzahl an künstlich erzeugten Sinneswahrnehmungen eine virtuelle Realität vorgespiegelt. Diese Sinnesreize sind einerseits audiovisuelle Reize, die über Bildwiedergabesysteme sowie Tonwiedergabesysteme dem Benutzer zugeführt werden. Auf der anderen Seite werden über die gattungsgleiche Vorrichtung Beschleunigungen bzw. Kräfte erzeugt, die auf den Benutzer wirken. Durch die Kombination aus audiovisuellen und physikalischen Sinneseindrücken interpretiert das menschliche Gehirn virtuelle Bewegungszustände. Diese Interpretation wirkt für den Benutzer umso realistischer, je exakter die Sinneswahrnehmungen den realen Sinneswahrnehmungen solcher Situationen gleichen. Aus diesem Grund ist es von großer Bedeutung, diese Signale so realitätsnah wie möglich dem Benutzer zuzuführen.

Des Weiteren sind bei der vorliegenden Vorrichtung Parametereingabeeinheiten vorgesehen, über die der Benutzer die Bewegungen des bewegten Systems in der virtuellen Welt steuern kann.

Dieses Steuersignal des Benutzers und etwaige Umwelteinflüsse (Wind, Fahrbahn etc.), die auch als Störgrößen bezeichnet werden können, werden einem physikalischen Simulationsmodell zugeführt. Dieses entspricht einer mathematischen Abbildung des realen Verhaltens des simulierten Objekts. Es beinhaltet Größen wie Massenträgheiten, Widerstände etc. Mit Hilfe dieses Modells werden die Beschleunigungen bzw. Kräfte und deren Orientierungen berechnet, die dem Benutzer in der virtuellen Welt zugeführt werden sollen. Dies geschieht über die Steuerung unterschiedliche Antriebe durch eine Steuerungseinheit.

Vorrichtungen zur räumlichen Bewegung von Personen, insbesondere Bewegungssimulatoren und Orientierungstrainer sind seit längerer Zeit bekannt.

Dem Stand der Technik entsprechende Vorrichtungen sind beispielsweise Ein-Arm Zentrifugen mit kardanisch aufgehängten Kabinen. Bei derartigen Vorrichtungen ist eine, um zwei Drehfreiheitsgrade drehbare Kabine am äußeren Ende eines drehbar angeordneten Armes vorgesehen. Durch die Rotation der Kabine mit einem gewissen Normalabstand zur Drehachse erfährt die Kabine und die sich darin befindende Person zusätzlich zur Erdbeschleunigung Zentrifugal- und Tangentialbeschleunigungen. Die resultierende Beschleunigungsrichtung und die Variation der Größe der Beschleunigung durch unterschiedliche Winkelgeschwindigkeiten kann durch gezielte Drehung der Kabine dazu verwendet werden, der Person gewisse Bewegungs- und Beschleunigungszustände vorzuspielen. Dabei weisen die zwei Drehachsen der Kabine einen gemeinsamen Schnittpunkt auf, welcher in der Regel im Bereich des Kopfes der Person liegt.

Eine weitere Einsatzmöglichkeit ist die das Vorsehen einer kardanisch aufgehängten Kabine in Zwei-Arm Zentrifugen, insbesondere Zwei-Arm Zentrifugen mit verfahrbarem Heave-Schlitten. Dieser Heave-Schlitten ist längs des Armes verfahrbar und weist darüber hinaus einen translatorischen Heave-Antrieb auf, welcher eine Bewegung der Kabine parallel zur Hauptrotationsachse des Hauptarmes ermöglicht.

Ferner sind Simulatoren bekannt, welche eine Kabine aufweisen, die auf einem Hexapod stehend angeordnet sind. Diese haben neben der Erdbeschleunigung keine weiteren Mittel zur statischen oder dauerhaften Erhöhung und Verringerung der resultierenden Beschleunigung auf die Person. Durch Neigungen und Drehungen der Kabine können ebenfalls Bewegungszustände simuliert werden, die jedoch überwiegend statische Flug- oder Fahrsituationen simulieren.

Insbesondere bei der Verwendung von kardanisch aufgehängten Kabinen in Ein-Arm Zentrifugen treten hohe Beschleunigungskräfte auf. Aus diesem Grund müssen die gesamte Aufhängung sowie die Drehkinematik hohen Kräften standhalten, was eine ausreichende Dimensionierung voraussetzt. Die ausreichende Dimensionierung geht jedoch einher mit einer Vergrößerung der Vorrichtung und somit wiederum einer Erhöhung des Gewichts sowie einer Erhöhung der Belastungskräfte.

Ferner werden in unterschiedlichen Simulatoren unterschiedliche kardanische Aufhängungen verwendet.

Herkömmliche stationäre Simulatoren sind beispielsweise aus der GB 2474279 A, der FR 2 687 491 A1, der US 5,433,608 A, der US 5,060,932 A, der EP 0 965 968 A2 und der US 4,162,582 A bekannt.

Aus der angeführten GB 2474279 A ist eine stationäre Bewegungsplattform für einen Fahrzeugsimulator bekannt.

Aus der angeführten FR 2 687 491 A1 ist ein stationärer Fahrzeugsimulator mit einem großen visuellen Feld und geringen bewegbaren Massen bekannt.

Aus der angeführten US 5,433,608 A sind ein stationärer Fahrzeugsimulator und ein Verfahren zur Steuerung des Fahrzeugsimulators bekannt.

Aus der angeführten US 5,060,932 A ist eine Unterhaltungsvorrichtung mit einer rotierbaren Kapsel bekannt.

Aus der angeführten EP 0 965 968 A2 ist ein stationärer Simulatorsystem bekannt.

Aus der angeführten US 4,162,582 A sind ein Flugtrainer und eine in der Themenvorrichtung zur Simulation von Luftakrobatik bekannt.

Aufgabe der vorliegenden Erfindung ist es nun die Nachteile des Standes der Technik zu überwinden sowie:

Eine möglichst kompakte Vorrichtung zur räumlichen Bewegung einer Person zu schaffen, bei der insbesondere die Anordnung der Trägerelemente zur Drehung der Person um zumindest zwei Drehfreiheitsgrade möglichst kompakt und klein ausgeführt ist wodurch die Bewegungsvorrichtung in positiver Weise kompakter und kostengünstiger herstellbar ist und bei der darüber hinaus eine verbesserte Simulation für die Person, insbesondere eine realistischere Simulation mit weniger Störeinflüssen auf kompakterem Raum erzielt wird.

Die erfindungsgemäßen Aufgaben werden dadurch gelöst, dass die Haltevorrichtung gegenüber der Bildwiedergabefläche zumindest einen Drehfreiheitsgrad aufweist.

Ferner ist die Erfindungsgemäße Aufgabe dadurch gelöst, dass das dritte Trägerelement, um eine dritte Drehachse drehbar gegenüber einer Bewegungsvorrichtung angeordnet ist wobei die zweite Drehachse und die dritte Drehachse im Wesentlichen orthogonal zueinander angeordnet sind oder dass das dritte Trägerelement, starr mit einer Bewegungsvorrichtung verbunden ist.

Weitere erfindungsgemäße Merkmale sind beispielsweise, dass die Bildwiedergabefläche am zweiten Trägerelement vorgesehen und mit diesem verbunden ist, dass sich die Trägerelemente und die Bewegungsvorrichtung in jeder beliebigen Drehstellung und Position außerhalb des Sichtfeldes der Person befinden, dass die Drehachsen im Wesentlichen durch das Zentrum verlaufen und/oder dass sich der Körper der Person, insbesondere der Kopf, der Körperschwerpunkt oder das Herz der Person im Bereich des Zentrums befindet.

Darüber hinaus sind können erfindungswesentliche Merkmale sein, dass die Bildwiedergabefläche im Wesentlichen der Innenseite eines konkav um die Haltevorrichtung gekrümmten Hohlkörpers folgend ausgebildet ist, dass der Hohlkörper und/oder die Bildwiedergabefläche eine im Wesentlichen geschlossene Form aufweist, insbesondere als Hohlkugel, als Hohlellipsoid, segmentiert hohlkugelförmig, segmentiert hohlkörperförmig, hohlkörperförmig oder Hohlkugelförmig ausgebildet ist, dass der Hohlkörper eine Öffnung zum Ein- und Ausstieg der Personen aufweist, und dass die Öffnung als verschließbare Öffnung ausgebildet ist, wobei bevorzugt der Verschluss die Form des Hohlkörpers vervollständigend ausgeführt ist.

Die Erfindung zeichnet sich auch dadurch aus, dass die Bewegungsvorrichtung als Einarmzentrifuge, als Zentrifuge mit verfahrbarem Schlitten, als Zentrifuge mit verfahrbarem Heave-Schlitten, als linear verfahrbarer Wagen, als Zweiarm-Zentrifuge mit beidseitig verfahrbarem Schlitten, als Zweiarm-Zentrifuge mit beidseitig verfahrbarem Heave-Schlitten, als Roboterarm mit zumindest einem rotatorischen und/oder translatorischen Freiheitsgrad, als Hexapod oder als ruhende Aufhängung ausgeführt ist, dass zumindest eine Steuerungseinheit und zumindest ein Antrieb zur Drehung der Trägerelemente um ihre jeweiligen Drehachsen und zum Antrieb der Bewegungsvorrichtung vorgesehen ist, und dass zumindest ein Antrieb von der Steuerungseinheit steuerbar ist, dass zum Antrieb des ersten Trägerelements um die erste Drehachse ein erster Antrieb; zum Antrieb des zweiten Trägerelements um die zweite Drehachse ein zweiter Antrieb; und gegebenenfalls zum Antrieb des dritten Trägerelements um die dritte Drehachse ein dritter Antrieb vorgesehen sind und/oder dass zumindest eine Parametereingabeeinheit zur Einflussnahme der Person auf die Steuerungseinheit, insbesondere auf die Steuerung der Bewegung der Trägerelemente und der Bewegungsvorrichtung vorgesehen ist.

Weitere Merkmale zur Lösung der erfindungsgemäßen Aufgaben sind, dass die Bildwiedergabefläche als das Bild eines oder mehrerer Projektoren reflektierende Bildwiedergabefläche, oder als Flachbildschirmfläche wie beispielsweise OLED-Bildschirmfläche, Plasma-Bildschirmfläche oder LCD-Bildschirmfläche ausgebildet ist, dass das erste Trägerelement und/oder die Haltevorrichtung einen Drehfreiheitsgrad gegenüber der Bildwiedergabefläche aufweist, dass die Bildwiedergabefläche zumindest einen Freiheitsgrad gegenüber der Bewegungsvorrichtung aufweist, dass die Bildwiedergabefläche und der Hohlkörper fest mit dem zweiten Trägerelement verbunden sind und/oder dass die Haltevorrichtung zumindest einen feststellbaren Freiheitsgrad gegenüber dem ersten Trägerelement aufweist.

Weiters ist die Vorrichtung dadurch gekennzeichnet, dass die Bildwiedergabefläche fest mit dem Hohlkörper verbunden ist oder, dass die Innenseite des Hohlkörpers die Bildwiedergabefläche ist, dass das erste Trägerelement bügelförmig, außerhalb des Sichtfeldes der Person verlaufend, angeordnet ist dass das zweite Trägerelement ringförmig, geschlossen hohlkörperförmig oder teilweise geschlossen hohlkörperförmig ausgebildet ist, wobei das erste Trägerelement an zumindest einer Stelle, bevorzugt an zwei Stellen drehbar um die erste Drehachse mit dem zweiten Trägerelement verbunden ist, dass das dritte Trägerelement ringförmig, geschlossen hohlkörperförmig oder teilweise geschlossen hohlkörperförmig ausgebildet ist, wobei das zweite Trägerelement an zumindest einer Stelle, bevorzugt an zwei Stellen drehbar um die zweite Drehachse mit dem dritten Trägerelement verbunden ist und/oder dass das dritte Trägerelement an zumindest einer Stelle, bevorzugt an zwei Stellen drehbar um die dritte Drehachse mit der Bewegungsvorrichtung verbunden ist.

Weitere Lösungen der erfindungsgemäßen Aufgabe sind dass die Drehachsen einander im Wesentlichen in einem Punkt schneiden, oder dass zumindest eine der Drehachsen von einer der übrigen Drehachsen einen Normalabstand aufweist, dass der Normalabstand dem kleinsten Abstand zwischen einem Auge und einem Gleichgewichtsorgan der Person entspricht, dass zur Simulation einer gleichförmigen, unbeschleunigten Bewegung, einer ruhenden Stellung oder einer quasistatischen Bewegung die Rollachse und die Hauptdrehachse im Wesentlichen einen Schnittpunkt aufweisen.

Darüberhinaus zeichnet sich die Erfindung dadurch aus, dass zur Simulation einer gleichförmigen, unbeschleunigten Bewegung, einer ruhenden Stellung oder eine quasistatischen Bewegung die erste Drehachse der Gierachse, die zweite Drehachse der Nickachse und die dritte Drehachse der Rollachse entspricht, dass die erste Drehachse der Nickachse, die zweite Drehachse der Rollachse entspricht, und dass die Drehung um dritte Drehachse(6) gesperrt ist, dass die erste Drehachse der Nickachse, die zweite Drehachse der Gierachse und die dritte Drehachse der Rollachse entspricht, dass die erste Drehachse der Gierachse, die zweite Drehachse der Rollachse und die dritte Drehachse der Nickachse entspricht, dass die erste Drehachse der Nickachse, die zweite Drehachse der Rollachse und die dritte Drehachse der Gierachse entspricht und/oder dass die erste Drehachse der Rollachse, die zweite Drehachse der Nickachse und die dritte Drehachse der Gierachse entspricht.

Zur Verbesserung der Klarheit werden eingangs einige Bezeichnungen definiert:

Als Gesichtsfeld ist der Bereich bezeichnet, der bei ruhiger, gerader Kopfhaltung und gerade ausgerichtetem, bewegungslosen Blick visuell wahrgenommen werden kann. Darüber hinaus wird unter dem Gesichtsfeld das binokulare Gesichtsfeld, also das Gesichtsfeld beider Augen definiert. Die seitliche Ausdehnung des Gesichtsfeld liegt bei bis etwa 180°, die Ausdehnung nach oben bei etwa 60° und die Ausdehnung nach unten bei etwa 70°.

Als Sichtfeld wird jener Bereich bezeichnet, der dem Gesichtsfeld entspricht, wobei das Sichtfeld in der Tiefe durch den jeweils nächstgelegenen undurchsichtigen Körper bzw. die nächstgelegene undurchsichtige Schicht begrenzt ist. Im Falle der vorliegenden Erfindung ist das Sichtfeld beispielsweise durch die Bildwiedergabefläche aber auch durch Cockpitelemente oder Ausrüstungsgegenstände wie Helme etc. begrenzt.

Das Blickfeld ist der gesamte Bereich, der von der Person, auch bei Drehung und Bewegung des Kopfes eingesehen werden kann.

Als Rollachse wird jene Achse bezeichnet, die entlang oder parallel der Blickrichtung bei gerader Kopfhaltung und gerade ausgerichteten bewegungslosen Blick verläuft.

Als Nick-Achse wird jene Achse bezeichnet, welche normal auf diese steht und im Wesentlichen die Verbindungsgerade beider Augen oder beider Ohren einer Person darstellt.

Die Gierachse ist jene Achse, die auf beide vorstehenden Achsen normal steht und somit z.B.im Wesentlichen Körperhochachse oder der Haupterstreckungsrichtung der Wirbelsäule eines Menschen folgt.

Zwei Drehachsen sind orthogonal, wenn ihre Richtungsvektoren orthogonal sind. Im dreidimensionalen Raum ist dazu kein Schnittpunkt nötig. Zwei Achsen können somit auch dann orthogonal sein, wenn sie windschief zueinander sind.

In weiterer Folge wird die Erfindung anhand mehrerer Ausführungsbeispiele näher beschrieben.
Fig. 1 zeigt eine Schrägansicht einer erfindungsgemäßen Simulatorkabine.
Fig. 2 zeigt eine Schnittdarstellung einer erfindungsgemäßen Simulatorkabine.
Fig. 3 zeigt einen Schnitt einer erfindungsgemäßen Simulatorkabine nach der Schnittebene III-III in Fig. 2, wobei in Fig. 3 die Schnittebene der Fig. 2; II-II dargestellt ist.
Fig. 4 zeigt eine Schnittdarstellung einer weiteren Ausführungsform der vorliegenden Erfindung.
Fig. 5 zeigt die Anordnung einer erfindungsgemäßen Simulatorkabine mit einer Einarmzentrifuge.
Fig. 6 zeigt eine Anordnung einer erfindungsgemäßen Simulatorkabine an einer Zweiarmzentrifuge.
Fig. 7 zeigt eine Anordnung einer erfindungsgemäßen Simulatorkabine mit einem längs verschiebbar angeordneten Schlitten.
Fig. 8 zeigt die erfindungsgemäße Simulatorkabine in Kombination mit einem Hexapod.

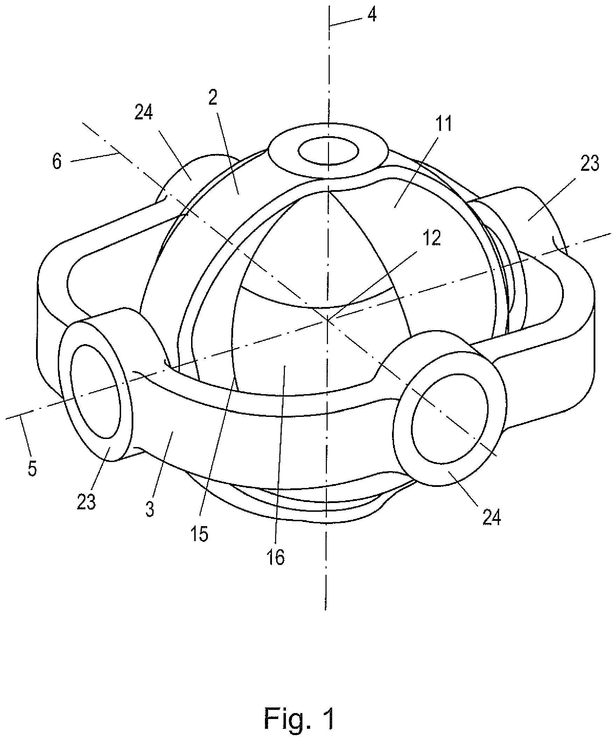

Fig. 1 zeigt eine Schrägansicht einer erfindungsgemäßen Vorrichtung zur räumlichen Bewegung von Personen, insbesondere eine Simulatorkabine mit einem dritten Trägerelement 3, an welchem ein zweites Trägerelement 2 drehbar um die zweite Drehachse 5 angeordnet ist. Fest mit dem zweiten Trägerelement 2 ist der Hohlkörper 11 verbunden. Dieser weist eine Öffnung 15 und einen Verschluss 16 auf. Das dritte Trägerelement 3 umfasst mehrere, im vorliegenden Fall vier Drehverbindungsvorrichtungen 23, 24. Die zweiten Drehverbindungsvorrichtungen 23 dienen der Verbindung und des Antriebes des zweiten Trägerelements 2 gegenüber dem dritten Trägerelement 3. Die dritten Drehverbindungsvorrichtungen 24 dienen der Drehbewegung des dritten Trägerelements 3 gegenüber der, hier nicht eingezeichneten Bewegungsvorrichtung 9.

Ferner sind schematisch eine erste Drehachse 4, eine zweite Drehachse 5 und eine dritte Drehachse 6 dargestellt. Die drei Drehachsen entsprechen im Wesentlichen den drei Drehachsen der Drehverbindungsvorrichtungen. In der dargestellten Grundstellung stehen alle drei Drehachsen aufeinander orthogonal. Die drei Achsen 4, 5, 6 treffen einander in dieser Ausführungsform im Wesentlichen in einem Punkt, welcher im Zentrum 12 angeordnet ist.

Der Hohlkörper 11 ist kugelförmig ausgebildet und weist eine Öffnung 15 zum Ein- und Ausstieg einer Person oder als allgemeine Luke zum Transport von Gegenständen auf. Diese Öffnung 15 ist durch einen Verschluss 16 verschließbar, der im Wesentlichen die Form des Hohlkörpers 11 vervollständigend ausgeführt ist. Es ist jedoch durchaus auch dem Erfindungsgedanken entsprechend, dass der Hohlkörper 11 nicht durchgehend kugelförmig ausgebildet ist, sondern Öffnungen aufweist, sowie beispielsweise Ellipsoidförmig, Zylinderförmig oder Quaderförmig ausgeführt ist.

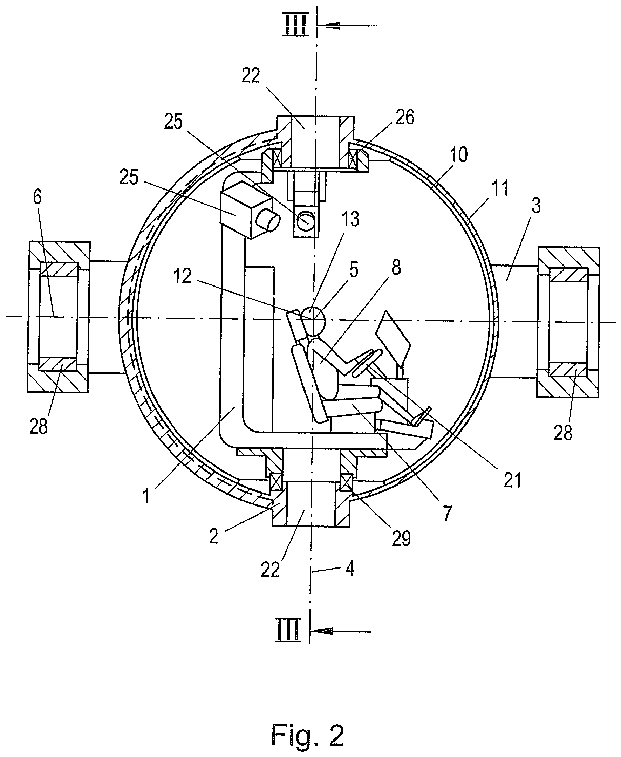

Fig. 2 zeigt eine Schnittdarstellung einer erfindungsgemäßen Ausführungsform. Die Vorrichtung zur räumlichen Bewegung einer Person 8, welche sich auf einer Haltevorrichtung 7 befindet, umfasst ein erstes Trägerelement 1, das mit der Haltevorrichtung 7 verbunden ist und um eine erste Drehachse 4 drehbar gegenüber einem zweiten Trägerelement 2 angeordnet ist. Das Trägerelement 1 ermöglicht eine Drehung von mindestens 10°, 20°, 30°, 45°, 90°, 180° oder 360°. Diese Drehung kann stufenlos, begrenzt oder unbegrenzt ermöglicht sowie aktiv geregelt sein.

Das zweite Trägerelement 2 ist um eine zweite Drehachse 5 drehbar gegenüber dem dritten Trägerelement 3 angeordnet. Die Drehachse 5 verläuft in dieser Darstellung projizierend und ist somit als Punkt dargestellt. Die erste Drehachse 4 und die zweite Drehachse 5 verlaufen im Wesentlichen orthogonal zueinander. Ferner ist ein drittes Trägerelement 3 vorgesehen, welches um eine dritte Drehachse 6 gegenüber einer, hier nicht dargestellten, Bewegungsvorrichtung 9 drehbar angeordnet ist, wobei die zweite Drehachse 5 und die dritte Drehachse 6 im Wesentlichen orthogonal zueinander angeordnet sind. Die Person 8 ist von der Haltevorrichtung 7 gehalten, die in dieser Ausführungsform als Sitz ausgeführt ist. Je nach Anwendung der Simulation können dieser Sitz und die umgebenden Teile unterschiedlichen Ausführungen von Flugzeug- oder Hubschraubercockpits, Automobilcockpits, einem LKW-Cockpit etc. nachempfunden sein. Dazu können sowohl die Sitzform, die äußere Ausgestaltung oder auch die Parametereingabeeinheiten 21 der spezifischen Anwendung angepasst sein. Die Parametereingabeeinheiten können beispielsweise durch Steuerknüppel, Joysticks, Lenkräder, Schalter, Schieber, Pedale etc. verwirklicht sein. Auch Head-up-Displays können je nach Einsatz vorgesehen sein. Das Cockpit kann dabei geschlossen, oder wie hier dargestellt offen ausgeführt sein. Der Sitz, also die Haltevorrichtung 7 ist bevorzugt einstellbar, sodass der Kopf 13 der Person 8 im Zentrum 12 der Vorrichtung platziert werden kann. Es ist aber durchaus dem Erfindungsgedanken entsprechend andere Körperteile, wie beispielsweise den Körperschwerpunkt oder das Herz der Person im Zentrum zu platzieren. Dazu kann die Haltevorrichtung 7 Längsverschiebbar, vertikal verschiebbar und optional auch seitlich verschiebbar, sowie drehbar ausgebildet sein.
Die Vorrichtung ermöglicht eine räumliche Bewegung der Person, zumindest um die drei Drehachsen 4, 5 und 6. Die erste Drehachse 4 entspricht in dieser Ausführungsform der Gier-Achse, die zweite Drehachse 5 entspricht in dieser Ausführungsform der Nick-Achse und die dritte Drehachse entspricht der Roll-Achse.

Anzumerken ist, dass durch Drehung der Haltevorrichtung und der Person um 90° um eine bestimmte Achse die übrigen zwei Achsen ihre Achsdefinition wechseln. Beispielsweise wird bei einer Drehung der Haltevorrichtung und der Person um 90° um die Gierachse die Rollachse zur Nickachse und die Nickachse zur Rollachse. Je nach Steuerung und Simulation kann dadurch die Konfiguration der Achsen flexibel verändert werden. Auch andere Achsen können durch Drehung um eine bestimmte Achse vertauscht werden.

Auf der Innenseite des Hohlkörpers 11 ist eine Bildwiedergabefläche 10 vorgesehen. Diese ist bevorzugt der Innenseite des Hohlkörpers folgend ausgebildet und erstreckt sich über das gesamte Gesichtsfeld, bevorzugt über das gesamte Blickfeld der Person 8. Das erste Trägerelement 1 befindet sich bevorzugt außerhalb des Blickfeldes der Person 8. Durch diese Anordnung sind ausschließlich gewünschte Teile der Haltevorrichtung insbesondere Cockpitteile, Parametereingabeeinheiten, Head-up-Displays, sowie der eigene Körper, der Sitz und die Bildwiedergabefläche für die Person sichtbar. Auf der Bildwiedergabefläche 10 werden bevorzugt bewegte Bilder, insbesondere computergenerierte Umgebungsbilder dargestellt. Diese Darstellung kann über Projektoren, aber auch über andere Bilddarstellungsvorrichtungen erfolgen. In der vorliegenden Ausführungsform sind Projektoren 25 vorgesehen. Diese projizieren das gewünschte Bild zumindest in das Gesichtsfeld der Person 8. Die Positionierung ist dabei derart ausgestaltet, dass sich die Projektoren selbst außerhalb des Blickfeldes und des Sichtfeldes der Person befinden. Der Bereich, auf den ein Bild projiziert wird, entspricht in bevorzugter Weise zumindest dem Gesichtsfeld der Person 8, oder einem Feld, das über das Gesichtsfeld der Position hinausgeht, sodass auch bei Bewegung des Kopfes im ermöglichten Maße ausschließlich angestrahlte Flächen für die Person einsehbar sind. Die Projektoren sind in der vorliegenden Ausführungsform fest mit dem ersten Trägerelement 1 verbunden. Bei Drehung dieses Elementes um die erste Drehachse drehen sich die Projektoren ebenso wie die Person mit und folgen somit dem Gesichtsfeld der Person.

Zum Antrieb der Drehungen um die Drehachsen 4, 5, 6 sind Drehverbindungsvorrichtungen 22, 23 und 24 vorgesehen. Für die Drehung des ersten Trägerelements sind ein erster Rotationsantrieb 26 sowie ein erstes Lager 29 vorgesehen. Der erste Rotationsantrieb ist bevorzugt als elektrischer Drehantrieb, im Speziellen als elektrischer Direktantrieb und/oder als Hydraulikantrieb ausgeführt.

Auch für die Drehung des zweiten Trägerelements 2 um die zweite Drehachse sind zumindest ein, bevorzugt zwei zweite Rotationsantriebe 27 vorgesehen. In der vorliegenden Darstellung sind diese nicht sichtbar.

Das dritte Trägerelement 3 beinhaltet zumindest einen dritten Rotationsantrieb, bevorzugt jedoch zwei dritte Rotationsantriebe 28. Diese ermöglichen die angetriebene Drehung gegenüber der Bewegungsvorrichtung 9. Auch die zweiten Rotationsantriebe 27 können in dem dritten Trägerelement vorgesehen sein. In dieser Ausführungsform wären die Antriebe zur Drehung des zweiten Trägerelements gegenüber dem dritten Trägerelement und die Antriebe zur Drehung des dritten Trägerelements gegenüber der Bewegungsvorrichtung in dem dritten Trägerelement vorgesehen.

Durch die vorliegende Konfiguration ist eine möglichst kompakte Ausführung der dargestellten Elemente begünstigt. Um eine realistische Simulation für die Person zu erzielen, ist ein gewisser Mindestabstand vom Kopf 13 der Person 8 zur Bildwiedergabefläche 10 vorteilhaft. Umso größer dieser Abstand ist, desto realer stellt sich für die Person der Eindruck eines, für die Darstellung der Umgebung nötigen, Fernbildes weit entfernter Objekte dar. Auf der anderen Seite sind die Bildwiedergabefläche 10 sowie die drei Trägerelemente sowie weitere Gegenstände von der Bewegungsvorrichtung bewegt. Insbesondere bei der Ausführung als Einarmzentrifuge oder auch als Zweiarmzentrifuge treten hohe Beschleunigungen und daraus resultierende Beschleunigungskräfte auf. Die Größe der, durch die drei Trägerelemente gebildete kardanische Aufhängung hat demnach direkten Einfluss auf die Dimensionierung der Bewegungsvorrichtung 9. So entsteht ein Zielkonflikt zwischen realistischer Darstellung und möglichst großem Abstand zwischen dem Kopf und der Bildwiedergabefläche und möglichst kompakten Abmaßen der kardanischen Aufhängung. Ferner ist es für die Realitätsnähe der Simulation wichtig, dass die Trägerelemente außerhalb des Sichtfeldes der Person liegen. Bei der vorliegenden Erfindung wird der möglichst große Abstand des Kopfes der Person von der Bildwiedergabefläche dadurch erzielt, dass die Bildwiedergabefläche nicht am Innersten (Ersten) Trägerelement vorgesehen ist, sondern auf ein weiter außen liegendes Trägerelement verschoben ist. Um dennoch die ungestörte Simulation, insbesondere die ungestörte Darstellung der Umgebung durch die Bildwiedergabefläche zu erzielen, ist das erste Trägerelement, welches einen Freiheitsgrad gegenüber der Bildwiedergabefläche aufweist, bügelförmig außerhalb des Blickfeldes der Person angeordnet. Ferner sind die Antriebe 27 und 28 zur Drehung um zwei Drehfreiheitsgrade in einem Ring, im vorliegenden Fall im dritten Trägerelement 3 vorgesehen. Die innerhalb des dritten Trägerelements liegenden Trägerelemente, also das erste und das zweite Trägerelement können dadurch kompakter ausgeführt werden. Insbesondere der Hohlkörper 11 übernimmt in der vorliegenden Ausführungsform tragende Funktionen und unterstützt das zweite Trägerelement festigkeitstechnisch.

Die Steuerung der Antriebe erfolgt über die hier nicht dargestellte Steuerungseinheit 17. Diese steuert bzw. regelt die Drehbewegung und die Drehstellung der Antriebe. Abgesehen von der Steuerung durch Simulationsmodelle kann auch die Person selbst über Parametereingabeeinheiten 21 Einfluss auf die Drehbewegung bzw. auf die Drehstellung der Antriebe Einfluss nehmen.

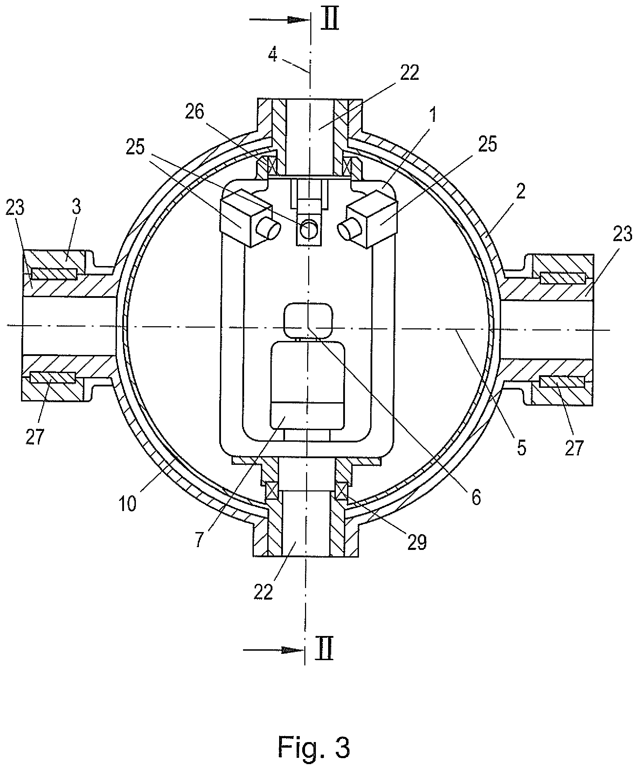

Fig. 3 zeigt einen Schnitt einer Ausführungsform der vorliegenden Erfindung nach der Schnittebene III-III in Fig. 2. Ferner ist die Schnittebene II-II für den Schnitt der Fig. 2 dargestellt. Wiederum ist ein erstes Trägerelement 1 drehbar, um eine erste Drehachse am zweiten Trägerelement 2 angeordnet. Das zweite Trägerelement ist ringförmig ausgestaltet und um die zweite Drehachse 5 gegenüber dem dritten Trägerelement 3 angeordnet. Zur Drehung sind zwei zweite Drehverbindungsvorrichtungen 23 vorgesehen, die jeweils den zweiten Rotationsantrieb 27 umfassen. Dieser ist, wie schon in der Beschreibung zu Fig. 2 angemerkt, im dritten Trägerelement, insbesondere in der zweiten Drehverbindungsvorrichtung des dritten Trägerelements vorgesehen.

Das erste Trägerelement 1 ist über die ersten Drehverbindungsvorrichtungen 22 mit dem zweiten Trägerelement 2 verbunden. Wiederum sind ein erster Rotationsantrieb 26 und ein erstes Lager 29 vorgesehen. Es ist jedoch durchaus dem Erfindungsgedanken entsprechend zwei Rotationsantriebe anzuordnen. Grundsätzlich ist es möglich, die Lagerung in die Antriebe selbst zu integrieren oder den Antrieb und die Lagerung als eigenständige Einheiten auszugestalten.

Ferner sind die Haltevorrichtung 7, drei Projektoren 25 und eine Bildwiedergabefläche 10 dargestellt. Je nach Einsatz und Größe der Bildwiedergabefläche kann es von Vorteil sein, mehr oder weniger Projektoren, bevorzugt jedoch drei Stück einzusetzen.

Auch in dieser Ausführungsform entspricht die erste Drehachse 4 der Gier-Achse, die zweite Drehachse 5 der Nick-Achse und die dritte, projizierend und somit als Punkt dargestellte Drehachse 6 der Rollachse.

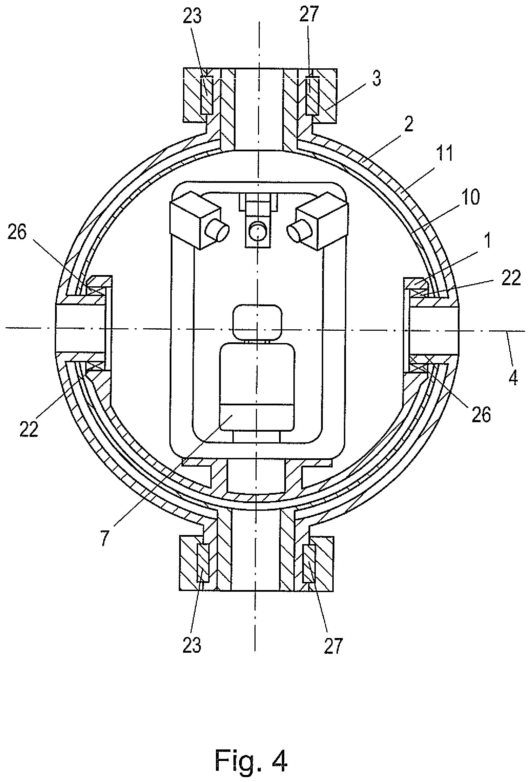

Fig. 4 zeigt eine weitere Ausführungsform, bei der sich die Achskonfiguration von der der vorhergehenden Beispiele unterscheidet. Wiederum ist das erste Trägerelement 1 drehbar gegenüber dem zweiten Trägerelement 2 um die erste Drehachse 4 drehbar gelagert. Das erste Trägerelement 1 erstreckt sich bügelförmig um die Haltevorrichtung 7 und ist um die Nickachse drehbar und antreibbar angeordnet. Das zweite Trägerelement 2 ist ringförmig ausgebildet und weist diametral gegenüberliegende, entlang der Gierachse angeordnete Drehverbindungsvorrichtungen, insbesondere zweite Drehverbindungsvorrichtungen 23 auf. Die Drehverbindungsvorrichtungen 23 sind ebenfalls, zumindest teilweise, Bestandteil des dritten Trägerelements, welches sich ringförmig um die am zweiten Trägerelement vorgesehene Bildwiedergabefläche, die in bevorzugter Weise der Innenseite eines Hohlkörpers 11 folgend ausgebildet ist. Desweiteren weist das dritte Trägerelement 3 zur Drehung gegenüber der Bewegungsvorrichtung zumindest eine, bevorzugt zwei diametral gegenüberliegend angeordnete dritte Drehverbindungsvorrichtungen 24 auf, die aufgrund der Darstellung nicht sichtbar sind. Auch das erste Trägerelement, welches bügelförmig ausgebildet ist weist zwei diametral gegenüberliegend angeordnete erste Drehverbindungsvorrichtungen 22 auf. Das dritte Trägerelement ist ringförmig ausgeführt, wobei der Ring in Grundstellung stehend angeordnet ist.

In der vorliegenden Konfiguration ist für eine Drehung um die Nickachse das erste Trägerelement, für eine Drehung um die Gierachse das zweite Trägerelement und für eine Drehung um die Rollachse das dritte Trägerelement eingerichtet. Wie auch in den weiteren Ausführungen der Erfindung angemerkt, ist durch Verdrehung um die Drehachsen 4, 5 und 6 ein Wechsel der definierten Achsrichtungen möglich. Die auch in den anderen Ausführungsbeispielen vorhandenen diametral gegenüberliegend angeordneten Drehverbindungsvorrichtungen umfassen Antriebe 26, 27, 28 sowie Lagerungen zur Führung der Drehbewegung. Bei der Ausführungsform nach Fig. 4 befinden sich Teile des ersten Trägerelements im Gesichtsfeld der Person 8. In manchen Fällen, beispielsweise bei Einengung des Sichtfeldes durch einen Helm oder durch undurchsichtige Cockpit-Elemente beeinträchtigt dies jedoch nicht die realitätsgetreue Darstellung der Umgebung auf der Bildwiedergabefläche, da diese Bereiche ohnehin abgedeckt sind. In derartigen Fällen liegt das erste Trägerelement trotzdem außerhalb des Sichtfeldes der Person.

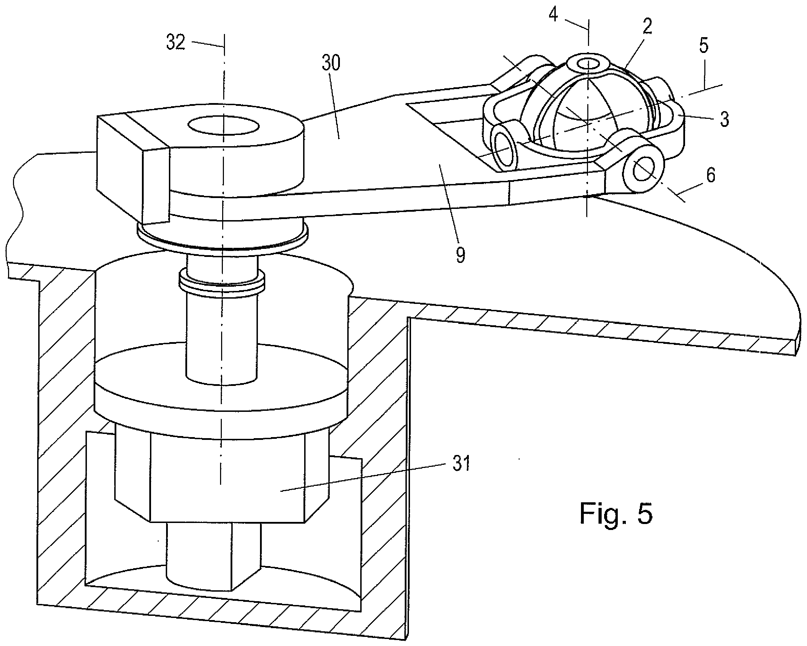

Fig. 5 zeigt eine erfindungsgemäße Vorrichtung zur räumlichen Bewegung von Personen, wobei die Bewegungsvorrichtung 9 als Einarmzentrifuge ausgebildet ist. Diese umfasst einen Hauptarm 30, der um die Hauptdrehachse 32 drehbar und von einem Hauptantrieb 31 antreibbar ist. Der Hauptantrieb 31 umfasst Antriebsmotoren und Kupplungselemente sowie Mittel zur Steuerung der Rotation. In bevorzugter Weise ist auch der Hauptantrieb 31 von der Steuerungseinheit 17 steuerbar und darüber hinaus von der Person über die Parametereingabeeinheiten 21 und von dem Simulationsmodell beeinflussbar. Der Hauptantrieb wird im Wesentlichen dazu verwendet, die Grundbeschleunigung, die sich aus Erdbeschleunigung, Zentripedalbeschleunigung und Tangentialbeschleunigung zusammensetzt, in ihrer Größe und Änderung zu beeinflussen. Diese Grundbeschleunigung wirkt stets entlang der Resultierenden der drei Beschleunigungsvektoren. Um nun die Person unterschiedlichen Beschleunigungszuständen auszusetzen, kann die Haltevorrichtung 7 und somit auch die Person 8 um die drei Drehachsen 4, 5, 6 gedreht werden. Ferner wird der Eindruck der Bewegung und/oder Beschleunigung durch Projektion oder Darstellung von Umgebungsbildern auf der Bildwiedergabefläche 10 unterstützt, womit sich für die betrachtende Person nahezu reale Bewegungsabläufe abbilden lassen.

Derartige Bewegungsabläufe können beispielsweise Flugsituationen, Fahrsituationen von Automobilen, aber auch Belastungstests etc. sein. Die der Simulation zugrundeliegenden Simulationsmodelle sind in bevorzugter Weise durch eine Datenverarbeitungseinrichtung, wie beispielsweise einen Computer berechnet.

In der vorliegenden Konfiguration ist das dritte Trägerelement 3 drehbar um die dritte Drehachse 6 gegenüber der Bewegungsvorrichtung 9 drehbar angeordnet. Das zweite Trägerelement 2 ist ebenfalls drehbar, nämlich um die zweite Drehachse 5 am dritten Trägerelement 3 angeordnet. Diese beiden Drehachsen entsprechen zwei Drehfreiheitsgraden, wobei der dritte Drehfreiheitsgrad durch die Drehbarkeit des ersten Trägerelements 1 um die erste Drehachse 4 gegeben ist.

Der Hauptantrieb 31 sowie die nötigen Lagerungen und baulichen Einrichtungen sind schematisch dargestellt in einem Fundament versenkt angeordnet.

Gemäß einer weiteren, nicht dargestellten Ausführungsform ist das dritte Trägerelement starr mit der Bewegungsvorrichtung, beispielsweise mit dem Arm einer Einarmzentrifuge verbunden. Das Trägerelement kann somit auch ein Teil des Armes sein an dem zumindest eines der übrigen Trägerelemente drehbar angeordnet ist.

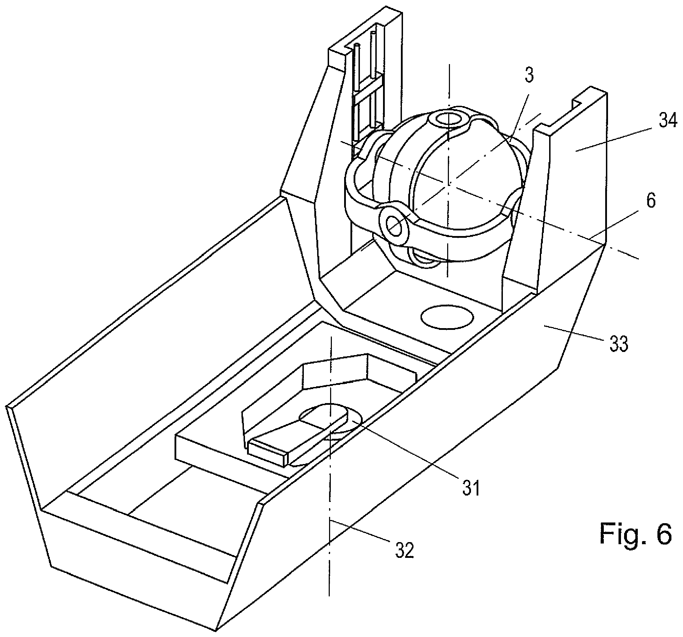

Fig. 6 zeigt eine weitere Ausführungsform der erfindungsgemäßen Vorrichtung. Dabei sind die drei Trägerelemente 1, 2, 3 an einem Heave-Schlitten vorgesehen. Dieser ist in dem Schlittenkorb 33 verschieblich angeordnet und kann beidseits der Hauptdrehachse 32 verfahren werden. Der Schlittenkorb 33 der Zweiarmzentrifuge ist um die Hauptachse 32 drehbar und von einem Hauptantrieb 31 rotatorisch angetrieben.

Durch diese Konfiguration ist es möglich, durch Änderung des Abstandes der Person von der Hauptdrehachse 32 auch bei konstanter Winkelgeschwindigkeit des Hauptantriebs 31 die resultierende Beschleunigung zu variieren. Zusätzlich zu diesen Freiheitsgraden ist das dritte Trägerelement 3 um eine dritte Drehachse 6 drehbar und antreibbar mit dem Heave-Schlitten verbunden. Darüber hinaus verfügt der Heave-Schlitten über einen Antrieb zur translatorischen Verschiebung der Trägerelemente, wobei die Richtung des Antriebes dieses Vertikallifts im Wesentlichen parallel zur Hauptdrehachse 32 verläuft. Die Person ist demnach abgesehen von den drei Drehfreiheitsgraden um die Drehachsen 4, 5 und 6 zusätzlich translatorisch parallel zur Hauptdrehachse 32, translatorisch entlang des Schlittenkorbs 33 und rotatorisch um die Hauptdrehachse 32 bewegbar. Die Richtung der translatorischen Bewegung des Heave-Schlittens im Schlittenkorb folgt in etwa einer Geraden, die normal auf die Hauptdrehachse 32 und normal auf die dritte Drehachse 6 steht.

Beschleunigungen und deren Änderungen können durch unterschiedliche Bewegungsvorgänge beeinflusst sein:
Beschleunigung durch Drehung des Schlittenkorbs:
   Dabei dreht sich der Schlittenkorb um seine Drehachse, wobei er beidseitig über diese Drehachse hinausragt. Auf diesem Schlittenkorb ist linear verschiebbar der Heave-Schlitten angeordnet. Befindet sich dieser Heave-Schlitten genau über der Drehachse des rotierenden Schlittenkorbs, so wirken auf die Person, abgesehen von der Erdbeschleunigung, keinerlei weitere Beschleunigungen. Obwohl sich der Benutzer dreht, empfindet er diesen Zustand im Wesentlichen als unbewegten Zustand, da ihm in dem abgeschlossenen Hohlkörper bzw. durch Abdeckung des gesamten Blickfeldes nach außen die visuellen Reize der Drehung fehlen.

Entfernt sich nun der Heave-Schlitten von der Drehachse, so steigt mit dem Abstand zur Drehachse die Radialbeschleunigung. Die resultierende Beschleunigung aus Erdbeschleunigung und der Radialbeschleunigung wird von dem Benutzer wahrgenommen. Bewegt sich der Heave-Schlitten wieder zurück und überquert er die Drehachse des Schlittenkorbs so erfährt der Benutzer einen Wechsel der Orientierung der Radialbeschleunigung. Zusätzlich tritt in Abhängigkeit von der Fahrgeschwindigkeit des Heave-Schlittens noch eine Coriolisbeschleunigung auf.

Um diese resultierende Beschleunigung in ihrer Größe zu variieren, kann entweder die Winkelgeschwindigkeit des Schlittenkorbs variiert werden oder der Heave-Schlitten variabel weiter nach außen verfahren werden.

Beschleunigung durch translatorische Bewegung:
Die lineare Geschwindigkeitsänderung des Heave-Schlittens entlang des Schlittenkorbs durch die erfindungsgemäße translatorische, im Wesentlichen lineare Bewegung sowie die linear Geschwindigkeitsänderung der Trägerelemente durch den Vertikallift sind weitere Möglichkeiten Beschleunigungen auf den Benutzer auszuüben.

Änderung der Richtung der Beschleunigung:
Um die Richtung der resultierenden, auf den Körper wirkenden Beschleunigung zu verändern, ist es vorteilhaft, den Körper der Person selbst zu bewegen, um damit beispielsweise den Eindruck einer Änderung der Beschleunigungsrichtung bzw. der Beschleunigungskomponentenamplitude hervorzurufen. Dies geschieht mit Hilfe der Drehungen der Trägerelemente um die Drehachsen 4, 5, 6 die in allen Ausführungsbeispielen als kardanische Aufhängung bezeichnet werden kann. Über diese Drehfreiheitsgrade kann nun die Haltevorrichtung und damit der Körper der Person beliebig gedreht werden. Zusätzlich ist die gesamte kardanische Aufhängung an einem Vertikallift drehbar angeordnet.

Zur Bewegung der Elemente der erfindungsgemäßen Vorrichtung sind eine Reihe von Antrieben vorgesehen. Die Stellgrößen für diese Antriebe können entweder aus dem physikalischen Simulationsmodell berechnet oder von einer Steuerzentrale vorgegeben werden. Die Erzeugung der audiovisuellen Reize kann ebenfalls entweder aus einem physikalischen Simulationsmodell hervorgehen oder einem fixen Ablauf folgen.
Die Drehachse des Schlittenkorbs verläuft lotrecht.
Die Bewegung des Heave-Schlittens im Schlittenkorb erfolgt entlang einer Geraden, wobei die Gerade orthogonal zu der Drehachse des Schlittenkorbs verläuft und mit ihr einen gemeinsamen Schnittpunkt hat. Die Bewegungsrichtung des Vertikallifts ist wiederum normal auf die Bewegungsgerade des Heave-Schlittens und somit parallel zu der Rotationsachse des Schlittenkorbs. Die Drehachse der Kardanaufhängung bezogen auf den Vertikallift verläuft tangential auf die Kreisbahn des Schlittenkorbes und somit waagerecht und normal auf die Bewegungsrichtung des Vertikallifts.

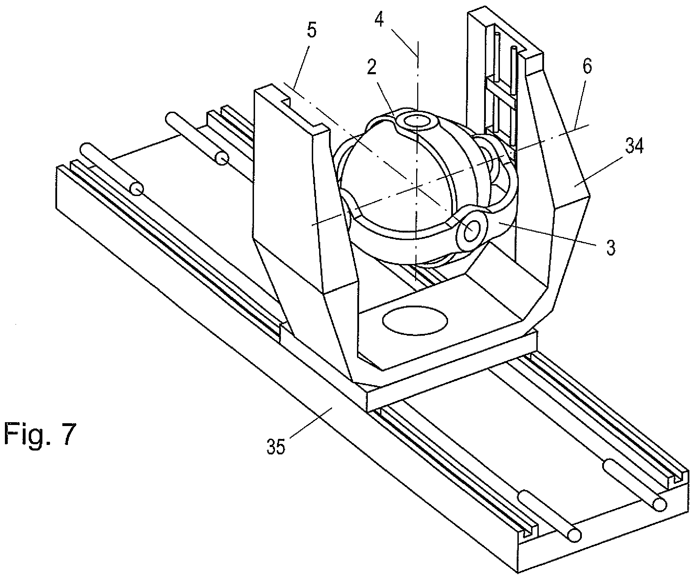

Fig. 7 zeigt eine weitere mögliche Ausführungsform der erfindungsgemäßen Vorrichtung zur räumlichen Bewegung von Personen. Dabei ist ein Heave-Schlitten vorgesehen, der translatorisch bewegbar ist. Diese Konfiguration entspricht im weitesten Sinne der Konfiguration aus Fig. 6, jedoch ist statt einem drehbar gelagerten Schlittenkorb 33 eine ortsfest angeordnete Schlittenführung 35 vorgesehen. Auf dieser Schlittenführung ist der Heave-Schlitten translatorisch verfahrbar und antreibbar angeordnet. Der Heave-Schlitten hat wiederum einen translatorischen Freiheitsgrad, welcher etwa normal auf die Richtung der Schlittenführung steht. An diesem ist wiederum drehbar um die dritte Drehachse das dritte Trägerelement 3 angeordnet. Das zweite Trägerelement 2 ist wiederum drehbar gegenüber dem dritten Trägerelement angeordnet und fest mit dem Hohlkörper 11 verbunden. Innerhalb dieses Hohlkörpers 11 befindet sich das erste Trägerelement 1, das um die erste Drehachse 4 drehbar gegenüber dem zweiten Trägerelement ausgeführt ist. Das erste Trägerelement ist wiederum mit der Haltevorrichtung 7 für eine Person 8 verbunden. Die dargestellte Ausführung eignet sich besonders für Längsdynamik-Simulationen und/oder Querdynamik-Simulationen, insbesondere für Fahrsimulationen im Automobilbereich wie beispielsweise Fahrbahnwechsel oder Überhohlmanöver.

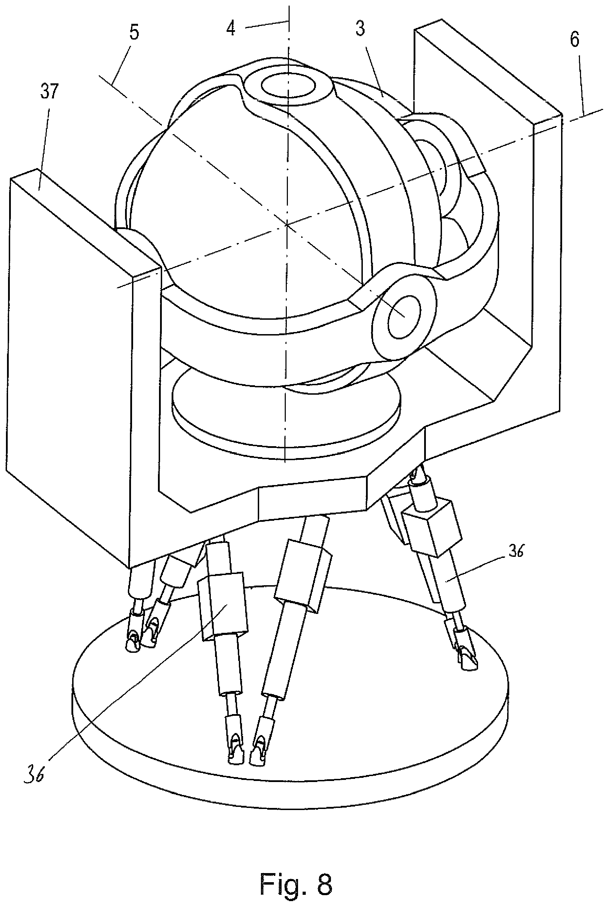

Fig. 8 zeigt eine weitere Ausführungsform der vorliegenden Vorrichtung. Dabei ist die, um die drei Drehachsen drehbar angeordnete Haltevorrichtung 7 für die Person 8 durch ein Hexapod bewegbar. Das Hexapod weist sechs Linearbewegungsvorrichtungen 36 auf, welche in ihrer Länge steuerbar und änderbar sind. Durch die gesteuerte Änderung der Längen der einzelnen Linearbewegungsvorrichtungen kann die Neigung der Haltevorrichtung 37 in mehreren Achsen variiert werden. An der Haltevorrichtung 37 ist wiederum das dritte Trägerelement 3 drehbar angeordnet. Die Konfiguration des ersten und zweiten Trägerelements sowie des Hohlkörpers 11 kann nach einem der vorangegangenen Ausführungsbeispiele ausgeführt sein. Darüber hinaus kann die Haltevorrichtung 37 des dritten Trägerelements unlimitiert drehbar gegenüber dem Hexapod angeordnet sein, wobei die Drehachse in Grundstellung im Wesentlichen lotrecht verläuft und durch Bewegung der Linearbewegungsvorrichtungen 36 neigbar ist.

Gemäß einer weiteren, nicht dargestellten Ausführungsform ist die Haltevorrichtung 7 für zumindest eine Person 8 abgesehen von den Freiheitsgraden der Bewegungsvorrichtung nur um zwei Drehachsen drehbar und antreibbar gelagert. Mögliche Bewegungsvorrichtungen 9 sind beispielsweise 1-Arm Zentrifugen bei denen das dritte Trägerelement starr mit der Bewegungsvorrichtung verbunden ist. Als mögliche Ausführungsform ist das erste Trägerelement drehbar um die Nickachse angeordnet und das zweite Trägerelement drehbar um die Rollachse. Die grundsätzliche kinematische Konfiguration entspricht einer herkömmlichen 1-Arm Zentrifuge, bei der die Person tangential in Rotationsrichtung blickend um eine Hauptdrehachse 32 eines Hauptarms 30 positioniert ist. Bei der vorliegenden Erfindung ist darüber hinaus die Bildwiedergabefläche 10 am zweiten Trägerelement 2 vorgesehen bzw. fix mit diesem verbunden. Die Haltevorrichtung 7, welche mit dem ersten Trägerelement 1 verbunden ist weist einen Drehfreiheitsgrad gegenüber dem zweiten Trägerelement 2 und somit der Bildwiedergabefläche 10 auf, welche in bevorzugter Weise der Innenseite eines Hohlkörpers 11 folgend ausgebildet ist. Der Hohlkörper 11 selbst kann dabei wie auch in den vorangegangenen Ausführungsbeispielen selbsttragende bzw. aussteifende Funktionen übernehmen und/oder als eigenständiger, in Leichtbauweise gebauter Körper ausgebildet sein. Durch das Vorsehen der Bildwiedergabefläche an dem zweiten Trägerelement ist die Darstellungsebene der Bilder in einer, vom Betrachter entfernten Lage positioniert, wodurch der Eindruck der Darstellung einer weit entfernten Umgebung verbessert ist. Wiederum ist dabei die erfindungsgemäße Aufgabe erfüllt, dass trotz des größeren Abstandes der Bildwiedergabefläche und dem Auge der Person die Baugröße kompakt gehalten werden kann. In dieser Ausführungsform entfällt somit die dritte Drehachse 6 bzw. ist diese Drehachse vorhanden, jedoch gegen eine Verdrehung gesperrt. Das dritte Trägerelement kann starr mit der Bewegungsvorrichtung verbunden sein oder auch in die Bewegungsvorrichtung beispielsweise in den Arm einer 1-Arm Zentrifuge integriert sein.

Eine weitere, nicht dargestellte Ausführungsform entspricht im Wesentlichen der, der Fig. 8 wobei jedoch keine Hexapod-Bewegungsvorrichtung vorgesehen ist. Vielmehr ist die Haltevorrichtung 37 starr mit dem Boden verbunden. In dieser Ausführungsform ist eine Drehung der Person um drei Drehachsen, welche sich im Zentrum 12 im Bereich des Kopfes schneiden, möglich.

In Kombination mit Ein- oder Mehrarmzentrifugen ist ein weiteres erfindungswesentliches Merkmal, dass durch die drehbare Anordnung der Haltevorrichtung um drei Drehachsen während der Simulation eine Positionierung der Person mit radialer Blickrichtung in Grundstellung ermöglicht ist. Wird der Person eine unbeschleunigte oder nahezu statische Bewegung, oder ein unbewegter, statischer Zustand simuliert, so dreht der Hauptarm der Bewegungsvorrichtung mit konstanter, vergleichsmäßig langsamer Geschwindigkeit um die Hauptachse 32. Dabei befindet sich die Person festgeschnallt auf der Haltevorrichtung und blickt im Wesentlichen radial nach außen oder radial nach innen also entweder zur Hauptdrehachse 32 hin bzw. von der Hauptdrehachse 32 weg. Die Person erfährt dabei eine leicht erhöhte, konstante Grundbeschleunigung, die jedoch von der Person nach kurzer Adaptierungsphase im Wesentlichen nicht als erhöht wahrgenommen wird. Um nun beispielsweise eine Anfahrbeschleunigung eines Fahrzeuges zu simulieren wird die Person um die Nickachse gedreht, wodurch die resultierende der Erdbeschleunigung und der Radialbeschleunigung gegenüber der Position des Körpers der Person verändert wird. In Grundstellung wirkt die resultierende Beschleunigung beispielsweise nach unten also entlang der Gierachse. Durch Verdrehung der Person um die Nickachse können somit Beschleunigungen wie Anfahrbeschleunigungen oder Bremsbeschleunigungen eines linear bewegten Fahrzeugs simuliert werden. Dabei ist die Blickrichtung der Person bei konstanter Drehung der Bewegungsvorrichtung stets radial nach innen oder radial nach außen. Die auftretende Gesamtbeschleunigung wird über die Steuerung der Rotationsgeschwindigkeit um die Hauptdrehachse 23 realisiert.

Um nun Seitenbeschleunigungen zu simulieren kann die Haltevorrichtung mit der Person um die Rollachse gedreht werden.

Eine weiteren Ausführungsform betrifft eine Vorrichtung zur räumlichen Bewegung von Personen umfassend: ein erstes Trägerelement 1, das eine Haltevorrichtung 7 für zumindest eine Person 8 aufweist und um eine erste Drehachse 4 drehbar gegenüber einem zweiten Trägerelement 2 angeordnet ist; ein zweites Trägerelement 2, das um eine zweite Drehachse 5 drehbar gegenüber einem dritten Trägerelement 3 angeordnet ist, wobei die erste Drehachse 4 und die zweite Drehachse 5 im Wesentlichen orthogonal zueinander angeordnet sind; und eine Bildwiedergabefläche 10; wobei die Bildwiedergabefläche 10 am zweiten Trägerelement 2, am dritten Trägerelement 3 oder an der Bewegungsvorrichtung 9 vorgesehen ist und wobei die Haltevorrichtung 7 gegenüber der Bildwiedergabefläche 10 zumindest einen, eine Drehung von mindestens 10°, 20°, 30°, 45°, 90°, 180° oder 360° zulassenden Drehfreiheitsgrad aufweist.

Eine weitere Ausführungsform betrifft eine ähnliche Vorrichtung zur räumlichen Bewegung von Personen umfassend: ein erstes Trägerelement 1, das eine Haltevorrichtung 7 für zumindest eine Person 8 aufweist und um eine erste Drehachse 4 drehbar gegenüber einem zweiten Trägerelement 2 angeordnet ist; ein zweites Trägerelement 2, das um eine zweite Drehachse 5 drehbar gegenüber einem dritten Trägerelement 3 angeordnet ist wobei die erste Drehachse 4 und die zweite Drehachse 5 im Wesentlichen orthogonal zueinander angeordnet sind; ein drittes Trägerelement 3, das um eine dritte Drehachse 6 drehbar gegenüber einer Bewegungsvorrichtung 9 angeordnet ist wobei die zweite Drehachse 5 und die dritte Drehachse 6 im Wesentlichen orthogonal zueinander angeordnet sind; und eine Bildwiedergabefläche 10; wobei die Bildwiedergabefläche 10 am zweiten Trägerelement 2 vorgesehen und mit diesem verbunden ist.

An dieser Stelle sei angemerkt, dass die Bildwiedergabefläche als Fläche bezeichnet ist, jedoch auch aus mehreren zusammengesetzten Flächen bestehen kann. Alle dargelegten Ausführungsformen und alle Ausführungsformen, die sich für den Fachmann in naheliegender Weise ergeben, umfassen zumindest eine Haltevorrichtung 7 für eine Person 8, eine Bildwiedergabefläche, zumindest einen Antrieb, der über zumindest eine Steuerungseinheit steuerbar ist. Für die Steuerungseinheit kann es in allen Ausführungsbeispielen möglich sein dass, Simulationsmodelle aber auch die Person selbst über eine Parametereingabeeinheit 21 Einfluss auf die Steuerungseinheit nehmen. Die Haltevorrichtung 7 ist in bevorzugter Weise bei den vorliegenden Ausführungsformen als Sitz insbesondere als Sitz mit Befestigungsmöglichkeiten wie einem Gurt ausgeführt.

In bevorzugter Weise treffen sich die drei Drehachsen 4, 5 und 6, oder in Ausführungsformen mit lediglich zwei Freiheitsgraden die Achsen 4 und 5 in einem Punkt. Es kann jedoch vorteilhaft sein, die Achsen mit einem gewissen Normalabstand zueinander zu positionieren. Dieser Normalabstand kann in bevorzugter Weise dem kleinsten Abstand zwischen einem Auge und einem Gleichgewichtsorgan der Person betragen.
Ferner sind die unterschiedlichen Ausführungsformen der Fig. 1, Fig. 2, Fig. 3 und Fig.4 mit den jeweiligen Bewegungsvorrichtungen der Figuren 5 bis 8 sowie den nicht dargestellten Bewegungsvorrichtungen kombinierbar.

Darüber hinaus sei angemerkt, dass sich die Erfindung nicht auf die angeführten Ausführungsbeispiele beschränkt. Weitere, dem Erfindungsgedanken entsprechende Ausführungen ergeben sich auch aus Kombinationen einzelner oder mehrerer Merkmale, die aus der gesamten Beschreibung, den Figuren und/oder den Ansprüchen zu entnehmen sind. Somit sind auch Ausführungen offenbart, die aus Kombinationen von Merkmalen bestehen, die aus unterschiedlichen Ausführungsbeispielen stammen. Die Figuren sind zumindest teilweise schematische Darstellungen, wobei die Dimensionen und Proportionen von weiteren, zeichnerisch nicht dargestellten, Ausführungsformen oder Merkmalen sowie von realen Ausführungen abweichen können.
1. erstes Trägerelement
2. zweitesTrägerelement
3. drittesTrägerelement
4. erste Drehachse
5. zweite Drehachse
6. dritte Drehachse
7. Haltevorrichtung
8. Person
9. Bewegungsvorrichtung
10. Bildwiedergabefläche
11. Hohlkörpers
12. Zentrum
13. Kopf
14. Gesichtsfeld
15. Öffnung
16. Verschluss
17. Steuerungseinheit
21. Parametereingabeeineheit
22. erste Drehverbindungsvorrichtung
23. Zweite Drehverbindungsvorrichtung
24. Dritte Drehverbindungsvorrichtung
25. Projektor
26. Erster Rotationsantrieb
27. Zweiter Rotationsantrieb
28. Dritter Rotationsantrieb
29. Erstes Lager
30. Hauptarm
31. Hauptantrieb
32. Hauptdrehachse
33. Schlittenkorb
34. Heave schlitten
35. Schlittenführung
36. Linearbewegungsvorrichtung
37. Haltevorrichtung

## Patentansprüche

1. Vorrichtung zur räumlichen Bewegung von Personen umfassend:
eine Bewegungsvorrichtung (9), die als Einarmzentrifuge, als Zentrifuge mit verfahrbarem Schlitten, als Zentrifuge mit verfahrbarem Heave-Schlitten, als Zweiarm-Zentrifuge mit beidseitig verfahrbarem Schlitten oder als Zweiarm-Zentrifuge mit beidseitig verfahrbarem Heave-Schlitten ausgeführt ist,
- ein erstes Trägerelement (1), das eine Haltevorrichtung (7) für zumindest eine Person (8) aufweist und um eine erste Drehachse (4) drehbar gegenüber einem zweiten Trägerelement (2) angeordnet ist;
- ein zweites Trägerelement (2), das um eine zweite Drehachse (5) drehbar gegenüber einem dritten Trägerelement (3) angeordnet ist, wobei die erste Drehachse (4) und die zweite Drehachse (5) im Wesentlichen orthogonal zueinander angeordnet sind;
- und eine Bildwiedergabefläche (10);
**dadurch gekennzeichnet,**
- **dass** die Trägerelemente (1, 2, 3) und die Bewegungsvorrichtung (9) derart ausgestaltet sind, dass sie sich in jeder beliebigen Drehstellung und Position außerhalb des Sichtfeldes (14) der Person (8) befinden,
- **dass** das erste Trägerelement (1) und die Haltevorrichtung (7) einen Drehfreiheitsgrad gegenüber der Bildwiedergabefläche (10) aufweisen,
- und **dass** die Bildwiedergabefläche (10) am zweiten Trägerelement (2) oder am dritten Trägerelement (3) vorgesehen ist.

2. Vorrichtung nach Anspruch 1, **dadurch gekennzeichnet, dass** die Haltevorrichtung (7) gegenüber der Bildwiedergabefläche (10) einen, eine Drehung von mehr als 45°, 90°, 180° oder 360° erlaubenden Drehfreiheitsgrad aufweist.

3. Vorrichtung nach einem der Ansprüche 1 oder 2 **dadurch gekennzeichnet,**
- **dass** das dritte Trägerelement (3), um eine dritte Drehachse (6) drehbar gegenüber der Bewegungsvorrichtung (9) angeordnet ist wobei die zweite Drehachse (5) und die dritte Drehachse (6) im Wesentlichen orthogonal zueinander angeordnet sind,
- oder dass das dritte Trägerelement (3), starr mit einer Bewegungsvorrichtung (9) verbunden ist.

4. Vorrichtung nach einem der Ansprüche 1 bis 3, **dadurch gekennzeichnet,**
- **dass** die Bildwiedergabefläche (10) am zweiten Trägerelement (2) vorgesehen und mit diesem verbunden ist,
- oder dass die Bildwiedergabefläche(10) im Wesentlichen der Innenseite eines konkav um die Haltevorrichtung(7) gekrümmten Hohlkörpers(11) folgend ausgebildet ist und die Bildwiedergabefläche (10) und der Hohlkörper (11) fest mit dem zweiten Trägerelement (2) verbunden sind.

5. Vorrichtung nach einem der Ansprüche 1 bis 4, **dadurch gekennzeichnet,**
- **dass** die Drehachsen (4, 5, 6) im Wesentlichen durch ein Zentrum (12) verlaufen,
- und **dass** sich der Körper der Person (8), insbesondere der Kopf, der Körperschwerpunkt oder das Herz der Person im Bereich des Zentrums (12) befindet.

6. Vorrichtung nach einem der Ansprüche 1 bis 5, **dadurch gekennzeichnet,**
- **dass** die Bildwiedergabefläche (10) im Wesentlichen der Innenseite eines konkav um die Haltevorrichtung (7) gekrümmten Hohlkörpers (11) folgend ausgebildet ist,
- **dass** der Hohlkörper (11) und/oder die Bildwiedergabefläche (10) eine im Wesentlichen geschlossene Form aufweist, insbesondere als Hohlkugel, als Hohlellipsoid, segmentiert hohlkörperförmig oder Hohlkugelförmig ausgebildet ist,
- wobei bevorzugt die Bildwiedergabefläche fest mit dem Hohlkörper verbunden ist oder wobei bevorzugt die Innenseite des Hohlkörpers die Bildwiedergabefläche ist.

7. Vorrichtung nach einem der Ansprüche 1 bis 6, **dadurch gekennzeichnet, dass** die Bildwiedergabefläche (11) als das Bild eines oder mehrerer Projektoren reflektierende Bildwiedergabefläche, oder als Flachbildschirmfläche wie beispielsweise OLED-Bildschirmfläche, Plasma-Bildschirmfläche oder LCD-Bildschirmfläche ausgebildet ist.

8. Vorrichtung nach einem der Ansprüche 4 bis 7, **dadurch gekennzeichnet, dass** der Hohlkörper (11) eine Öffnung (15) zum Ein- und Ausstieg der Personen (8) aufweist und dass die Öffnung (15) als verschließbare Öffnung (15) ausgebildet ist, wobei bevorzugt der Verschluss (14) die Form des Hohlkörpers (11) vervollständigend ausgeführt ist.

9. Vorrichtung nach einem der Ansprüche 1 bis 8, **dadurch gekennzeichnet,**
- **dass** zumindest eine Steuerungseinheit (17) und zumindest ein Antrieb zur Drehung der Trägerelemente um ihre jeweiligen Drehachsen und zum Antrieb der Bewegungsvorrichtung vorgesehen ist,
- und **dass** der zumindest ein Antrieb von der Steuerungseinheit (17) steuerbar ist und dass zumindest eine Parametereingabeeinheit (21) zur Einflussnahme der Person auf die Steuerungseinheit (17), insbesondere auf die Steuerung der Bewegung der Trägerelemente (1, 2, 3) und der Bewegungsvorrichtung (9) vorgesehen ist.

10. Vorrichtung nach einem der Ansprüche 1 bis 9, **dadurch gekennzeichnet, dass** die Bildwiedergabefläche (10) zumindest einen Freiheitsgrad gegenüber der Bewegungsvorrichtung (9) aufweist.

11. Vorrichtung nach einem der Ansprüche 1 bis 10, **dadurch gekennzeichnet, dass** die Haltevorrichtung (7) zumindest einen feststellbaren Freiheitsgrad gegenüber dem ersten Trägerelement (1) aufweist.

12. Vorrichtung nach einem der Ansprüche 1 bis 11, **dadurch gekennzeichnet, dass** das zweite Trägerelement (2) ringförmig, geschlossen hohlkörperförmig oder teilweise geschlossen hohlkörperförmig ausgebildet ist, wobei das erste Trägerelement (1) an zumindest einer Stelle, bevorzugt an zwei Stellen drehbar um die erste Drehachse (4) mit dem zweiten Trägerelement (2) verbunden ist.

13. Vorrichtung nach einem der Ansprüche 1 bis 12, **dadurch gekennzeichnet, dass** das dritte Trägerelement (3) ringförmig, geschlossen hohlkörperförmig oder teilweise geschlossen hohlkörperförmig ausgebildet ist, wobei das zweite Trägerelement an zumindest einer Stelle, bevorzugt an zwei Stellen drehbar um die zweite Drehachse (5) mit dem dritten Trägerelement verbunden ist.

14. Vorrichtung nach einem der Ansprüche 1 bis 13, **dadurch gekennzeichnet, dass** das dritte Trägerelement (3) an zumindest einer Stelle, bevorzugt an zwei Stellen drehbar um die dritte Drehachse (6) mit der Bewegungsvorrichtung (9) verbunden ist.

15. Vorrichtung nach einem der Ansprüche 1 bis 14, **dadurch gekennzeichnet, dass** die erste Drehachse (4) der Nickachse, die zweite Drehachse (5) der Gierachse und die dritte Drehachse (6) der Rollachse entspricht,
oder dass die erste Drehachse (4) der Gierachse, die zweite Drehachse (5) der Rollachse und die dritte Drehachse (6) der Nickachse entspricht
oder dass die erste Drehachse (4) der Nickachse, die zweite Drehachse (5) der Rollachse und die dritte Drehachse (6) der Gierachse entspricht
oder dass die erste Drehachse (4) der Rollachse, die zweite Drehachse (5) der Nickachse und die dritte Drehachse (6) der Gierachse entspricht.

## Claims

1. A device for spatially moving persons, comprising:
a movement device (9) in the form of a single-arm centrifuge, a centrifuge with a movable carriage, a centrifuge with a movable heave carriage, a double-arm centrifuge with a carriage movable on both sides or a double-arm centrifuge with a heave carriage movable on both sides,
- a first support element (1), which has a retaining device (7) for at least one person (8) and is arranged so as to be rotatable about a first rotational axis (4) relative to a second support element (2);
- a second support element (2), which is arranged so as to be rotatable about a second rotational axis (5) relative to a third support element (3), the first rotational axis (4) and the second rotational axis (5) being arranged substantially orthogonal to each other;
- and an image playback area (10);
**characterised in that**
- the support elements (1, 2, 3) and the movement device (9) are designed such that they are outside the field of vision (14) of the person (8) in any rotational location and position,
- the first support element (1) and the retaining device (7) have a rotational degree of freedom relative to the image playback area (10),
- and the image playback area (10) is provided on the second support element (2) or on the third support element (3).

2. The device according to Claim 1,**characterised in that** the retaining device (7) has a rotational degree of freedom that allows a rotation of more than 45°, 90°, 180° or 360° relative to the image playback area (10).

3. The device according to one of Claims 1 or 2, **characterised in that**
- the third support element (3) is arranged so as to be rotatable about a third rotational axis (6) relative to the movement device (9), wherein the second rotational axis (5) and the third rotational axis (6) are arranged substantially orthogonal to each other,
- or the third support element (3) is connected rigidly to a movement device (9).

4. The device according to any one of Claims 1 to 3, **characterised in that**
- the image playback area (10) is provided on the second support element (2) and is connected to same,
- or the image playback area (10) is formed substantially following the inside of a hollow body (11) that is curved concavely around the retaining device (7), and the image playback area (10) and the hollow body (11) are connected fixedly to the second support element (2).

5. The device according to any one of Claims 1 to 4, **characterised in that**
- the rotational axes (4, 5, 6) run substantially through a centre (12),
- and the body of the person (8), in particular the head, the centre of gravity of the body or the heart of the person is situated in the region of the centre (12).

6. The device according to any one of Claims 1 to 5, **characterised in that**
- the image playback area (10) is formed substantially following the inside of a hollow body (11) curved concavely around the retaining device (7),
- the hollow body (11) and/or the image playback area (10) has a substantially closed shape, is in particular formed as a hollow sphere, as a hollow ellipsoid, is hollow-body-shaped in a segmented manner or is hollow-sphere-shaped,
- wherein the image playback area is preferably connected fixedly to the hollow body or wherein the inside of the hollow body is preferably the image playback area.

7. The device according to any one of Claims 1 to 6, **characterised in that** the image playback area (11) is in the form of an image playback area that reflects the image of one or more projectors or in the form of a flat screen area such as an OLED screen area, plasma screen area or LCD screen area.

8. The device according to any one of Claims 4 to 7, **characterised in that** the hollow body (11) has an opening (15) for the persons (8) to get in and out, and the opening (15) is in the form of a closable opening (15), wherein the closure (14) is preferably designed to complete the shape of the hollow body (11).

9. The device according to any one of Claims 1 to 8, **characterised in that**
- at least one control unit (17) and at least one drive are provided to rotate the support elements about the respective rotational axes thereof and to drive the movement device,
- and the at least one drive can be controlled by the control unit (17), and at least one parameter input unit (21) is provided for the person to influence the control unit (17), in particular to influence the control of the movement of the support elements (1, 2, 3) and of the movement device (9).

10. The device according to any one of Claims 1 to 9, **characterised in that** the image playback area (10) has at least one degree of freedom relative to the movement device (9).

11. The device according to any one of Claims 1 to 10, **characterised in that** the retaining device (7) has at least one settable degree of freedom relative to the first support element (1).

12. The device according to any one of Claims 1 to 11, **characterised in that** the second support element (2) is annular, in the shape of a closed hollow body or in the shape of a partially closed hollow body, wherein the first support element (1) is connected to the second support element (2) at least at one point, preferably at two points, so as to rotate about the first rotational axis (4).

13. The device according to any one of Claims 1 to 12, **characterised in that** the third support element (3) is annular, in the shape of a closed hollow body or in the shape of a partially closed hollow body, wherein the second support element is connected to the third support element at least at one point, preferably at two points, so as to rotate about the second rotational axis (5).

14. The device according to any one of Claims 1 to 13, **characterised in that** the third support element (3) is connected to the movement device (9) at least at one point, preferably at two points, so as to rotate about the third rotational axis (6).

15. The device according to any one of Claims 1 to 14, **characterised in that**
the first rotational axis (4) corresponds to the pitch axis, the second rotational axis (5) corresponds to the yaw axis, and the third rotational axis (6) corresponds to the roll axis;
or the first rotational axis (4) corresponds to the yaw axis, the second rotational axis (5) corresponds to the roll axis, and the third rotational axis (6) corresponds to the pitch axis;
or the first rotational axis (4) corresponds to the pitch axis, the second rotational axis (5) corresponds to the roll axis, and the third rotational axis (6) corresponds to the yaw axis;
or the first rotational axis (4) corresponds to the roll axis, the second rotational axis (5) corresponds to the pitch axis, and the third rotational axis (6) corresponds to the yaw axis.

## Revendications

1. Dispositif destiné à déplacer des personnes dans l'espace, comprenant :
- un dispositif de déplacement (9), qui est réalisé sous la forme d'une machine centrifuge à un bras, sous la forme d'une machine centrifuge à chariot déplaçable, sous la forme d'une machine centrifuge avec chariot de levage déplaçable, sous la forme d'une machine centrifuge à deux bras avec un chariot déplaçable de part et d'autre ou sous la forme d'une machine centrifuge à deux bras avec un chariot de levage déplaçable de part et d'autre,
- un premier élément porteur (1), qui comporte un dispositif de maintien (7) pour au moins une personne (8) et qui est placé en étant rotatif autour d'un premier axe de rotation (4) par rapport à un deuxième élément porteur (2) ;
- un deuxième élément porteur (2), qui est placé en étant rotatif autour d'un deuxième axe de rotation (5) par rapport à un troisième élément porteur (3), le premier axe de rotation (4) et le deuxième axe de rotation (5) étant placés sensiblement de manière orthogonale l'un par rapport à l'autre ;
- et une surface de reproduction d'image (10) ;
**Caractérisé**
- **en ce que** les éléments porteurs (1, 2, 3) et le dispositif de déplacement (9) sont conçus de telle sorte que dans n'importe quelle position en rotation et position, ils soient situés hors du champ visuel (14) de la personne (8),
- **en ce que** le premier élément porteur (1) et le dispositif de maintien (7) font preuve d'un niveau de liberté en rotation par rapport à la surface de reproduction d'image (10),
- et **en ce que** surface de reproduction d'image (10) est prévue sur le deuxième élément porteur (2) ou sur le troisième élément porteur (3).

2. Dispositif selon la revendication 1, **caractérisé en ce que** le dispositif de maintien (7) fait preuve par rapport à la surface de reproduction d'image (10) d'un niveau de liberté en rotation permettant une rotation de plus de 45°, 90°, 180° ou 360°.

3. Dispositif selon l'une quelconque des revendications 1 ou 2, **caractérisé**
- **en ce que** le troisième élément porteur (3) est placé en étant rotatif autour d'un troisième axe de rotation (6) par rapport au dispositif de déplacement (9), le deuxième axe de rotation (5) et le troisième axe de rotation (6) étant sensiblement placés de manière orthogonale l'un par rapport à l'autre,
- ou en ce que le troisième élément porteur (3) est relié de manière rigide avec un dispositif de déplacement (9).

4. Dispositif selon l'une quelconque des revendications 1 à 3, **caractérisé**
- **en ce que** la surface de reproduction d'image (10) est prévue sur le deuxième élément porteur (2) et reliée avec celui-ci,
- ou en ce que la surface de reproduction d'image (10) est conçue en suivant sensiblement la face intérieure d'un corps creux (11) recourbé de manière concave autour du dispositif de maintien (7) et en ce que la surface de reproduction d'image (10) et le corps creux (11) sont solidement reliés avec le deuxième élément porteur (2).

5. Dispositif selon l'une quelconque des revendications 1 à 4, **caractérisé**
- **en ce que** les axes de rotation (4, 5, 6) s'écoulent sensiblement à travers un centre (12),
- et **en ce que** le corps de la personne (8), notamment la tête, le centre de gravité du corps ou le coeur de la personne se trouve dans la région du centre (12).

6. Dispositif selon l'une quelconque des revendications 1 à 5, **caractérisé**
- **en ce que** la surface de reproduction d'image (10) est conçue en suivant sensiblement la face intérieure d'un corps creux (11) recourbé de manière concave autour du dispositif de maintien (7),
- **en ce que** le corps creux (11) et/ou la surface de reproduction d'image (10) présente une forme sensiblement fermée, notamment de sphère creuse, d'ellipsoïde creux, est conçu(e) en forme de corps creux segmenté ou en forme de sphère creuse,
- de préférence la surface de reproduction d'image étant reliée solidement avec le corps creux ou de préférence, la face intérieure du corps creux étant la surface de reproduction d'image.

7. Dispositif selon l'une quelconque des revendications 1 à 6, **caractérisé en ce que** la surface de reproduction d'image (11) est conçue en tant que surface de reproduction d'image réfléchissant l'image d'un ou de plusieurs projecteurs ou en tant que surface d'un écran plat, comme par exemple une surface d'un écran OLED, une surface d'écran d'un écran plasma ou une surface d'un écran LCD.

8. Dispositif selon l'une quelconque des revendications 4 à 7, **caractérisé en ce que** le corps creux (11) comporte une ouverture (15) pour l'entrée et la sortie de la personne (8) et **en ce que** l'ouverture (15) est conçue en tant qu'une ouverture (15) pouvant se fermer, de préférence la fermeture (14) étant réalisée de manière à compléter la forme du corps creux (11).

9. Dispositif selon l'une quelconque des revendications 1 à 8, **caractérisé**
- **en ce qu'**il est prévu au moins une unité de commande (17) et au moins un entraînement pour la rotation des éléments porteurs autour de leurs axes de rotation respectifs et pour l'entraînement du dispositif de déplacement,
- et **en ce que** l'au moins un entraînement est susceptible d'être commandé par l'unité de commande (17) et en ce qu'au moins une unité de saisie de paramètres (21) est prévue pour permettre à la personne d'influencer l'unité de commande (17), notamment la commande du déplacement de l'élément porteur (1, 2, 3) et du dispositif de déplacement (9).

10. Dispositif selon l'une quelconque des revendications 1 à 9, **caractérisé en ce que** la surface de reproduction d'image (10) fait preuve d'au moins un niveau de liberté par rapport au dispositif de déplacement(9).

11. Dispositif selon l'une quelconque des revendications 1 à 10, **caractérisé en ce que** le dispositif de maintien (7) fait preuve d'au moins un niveau de liberté contrôlable par rapport au premier élément porteur (1).

12. Dispositif selon l'une quelconque des revendications 1 à 11, **caractérisé en ce que** le deuxième élément porteur (2) est conçu de forme annulaire, en forme de corps creux fermé ou en forme de corps creux partiellement fermé, le premier élément porteur (1) étant relié par au moins un endroit, de préférence par deux endroits avec le deuxième élément porteur (2), en étant rotatif autour du premier axe de rotation (4).

13. Dispositif selon l'une quelconque des revendications 1 à 12, **caractérisé en ce que** le troisième élément porteur (3) est conçu de forme annulaire, en forme de corps creux fermé ou en forme de corps creux partiellement fermé, le deuxième élément porteur étant relié par au moins un endroit, de préférence par deux endroits avec le troisième élément porteur, en étant rotatif atour du deuxième axe de rotation (5).

14. Dispositif selon l'une quelconque des revendications 1 à 13, **caractérisé en ce que** le troisième élément porteur (3) est relié par au moins un endroit, de préférence par deux endroits avec le dispositif de déplacement (9), en étant rotatif autour du troisième axe de rotation (6).

15. Dispositif selon l'une quelconque des revendications 1 à 14, **caractérisé en ce que** le premier axe de rotation (4) correspond à l'axe de tangage, le deuxième axe de rotation (5) correspond à l'axe de lacet et le troisième axe de rotation (6) correspond à l'axe de roulement,
ou **en ce que** le premier axe de rotation (4) correspond à l'axe de lacet, le deuxième axe de rotation (5) correspond à l'axe de roulement et le troisième axe de rotation (6) correspond à l'axe de tangage,
ou **en ce que** le premier axe de rotation (4) correspond à l'axe de tangage, le deuxième axe de rotation (5) correspond à l'axe de roulement et le troisième axe de rotation (6) correspond à l'axe de lacet,
ou **en ce que** le premier axe de rotation (4) correspond à l'axe de roulement, le deuxième axe de rotation (5) correspond à l'axe de tangage et le troisième axe de rotation (6) correspond à l'axe de lacet.
